# EUROPEAN PATENT SPECIFICATION

(11) **EP 1 652 737 B1**
(45) Date of publication and mention of the grant of the patent: **08.10.2008**
(21) Application number: 05018686.5
(22) Date of filing: 29.08.2005
(51) Int. Cl.: B60R 21/16

(54) **Airbag and airbag apparatus**
Airbag und Airbagvorrichtung
Airbag et dispositif d'airbag

(30) Priority: 28.10.2004 JP 2004314187
(43) Date of publication of application: 03.05.2006
(73) Proprietor: TAKATA CORPORATION, Minato-ku, Tokyo 106-8510 (JP)
(72) Inventor: Tsujimoto, Kei, Tokyo 106-8510 (JP); Nakazawa, Wataru, Tokyo 106-8510 (JP); Matsui, Yoshitaka, Tokyo 106-8510 (JP)
(74) Representative: Banzer, Hans-Jörg

(56) References cited:
- WO-A-01/23219
- WO-A-97/37874
- GB-A- 2 354 745
- JP-A- 10 129 380
- US-B1- 6 630 220

## Description

### [Technical Field]

The present invention relates to an airbag apparatus mounted in an automobile or the like and an airbag included in the airbag apparatus.

### [Background Art]

A typical airbag apparatus mounted in a vehicle, such as an automobile, includes an airbag and an inflator for inflating the airbag. When, for example, the vehicle collides, gas is discharged from the inflator and the airbag is inflated by the gas.

Typically, the airbag is formed by sewing two base cloths together such that an inflatable chamber is provided between the base cloths.

In order to increase the airtightness between the sewn portions of the base cloths, the sewn portions are often sealed by applying a sealant made of silicon resin or the like to the base cloths. However, the manufacturing efficiency of the air bag is low since it takes a long time for the sealant to dry.

Japanese Unexamined Patent Application Publication No. 8-301036 discloses an airbag including two circular base cloths constructed of thermofusible woven cloths of nylon, polyester, or the like. The base cloths are heat-sealed to each other at the outer periphery thereof, and are then sewn together at the inner periphery of the heat-sealed portions thereof.

In US 6,630,220 B1, a sewn fusion seal process for producing an air-holding vehicle restraint system is disclosed. In particular, it is described to coat a textile fabric with a thermoplastic polymeric material and to use a combination of sewing and heat-sealing for manufacturing an airbag. The heat sealing process involves melting of the thermoplastic polymeric material. This known airbag corresponds to the features in the preamble of independent claim 1.

In GB 2 354 745 A, a side impact air-bag for a motor vehicle is disclosed. In this airbag, two base cloths are joined together by hollow weave through a generally C-shaped linear joining portion. Additionally, a heat-resistant elastomer is coated on the two base cloths including the linear joining portion.

In WO 97/37874, an airbag fabric is disclosed. The fabric includes a plurality of reinforced layers. For constructing an airbag, pieces of the fabric may be sewn or thermomechanically bonded.

In WO 01/23219 A1, a welded airbag cushion comprising sewn reinforcement seams is disclosed. In particular, an airbag is described in which two fabrics are adhered together by means of welds which are reinforced with sewn seams positioned adjacent to the welded areas.

### [Problems to be Solved by the Invention]

In the airbag according to Japanese Unexamined Patent Application Publication No. 8-301036, the base cloths are sewn at the inner periphery of the heat-sealed portions of the base cloth, and the sewn portions are not heat-sealed. Therefore, when the pressure in the airbag is increased, the sewn portions open and the airtightness between the sewn portions is reduced.

An object of the present invention is to provide an airbag having a high airtightness at sewn portions and an airbag apparatus including the airbag.

### [Means for Solving the Problems]

The above object is achieved by an airbag according to Claim 1. The dependent claim defines an advantageous and preferred embodiment of the invention.

An airbag according to the present invention includes two base cloths that are sewn together such that an inflatable chamber is provided between the base cloths. At least one of the base cloths has a coating layer made of thermoplastic resin at least at the sewn portion thereof, and the sewn portions of the base cloths are adhered to each other by heat-sealing the coating layer and main bodies of the base cloths.

In addition, an airbag apparatus according to the present invention includes the airbag structured as above.

In the airbag according to the present invention, the sewn portions of the base cloths are adhered to each other by heat-sealing the coating layer. Therefore, the sewn portions are prevented from opening, and the airtightness between the sewn portions is high.

In addition, the main bodies of the base cloths are also be adhered by heat-sealing together with the coating layer. Therefore, the overall bodies of the base cloths are adhered to each other by heat-sealing at the sewn portions thereof, and therefore the airtightness and strength of the airbag at the sewn portions are further increased.

### [Brief Description of the Drawings]

Fig. 1 is a front view of an airbag according to an embodiment.
Fig. 2 is a sectional view of Fig. 1 taken along line II-II.
Fig. 3 is a sectional view of a base cloth.

### [Best Mode for Carrying Out the Invention]

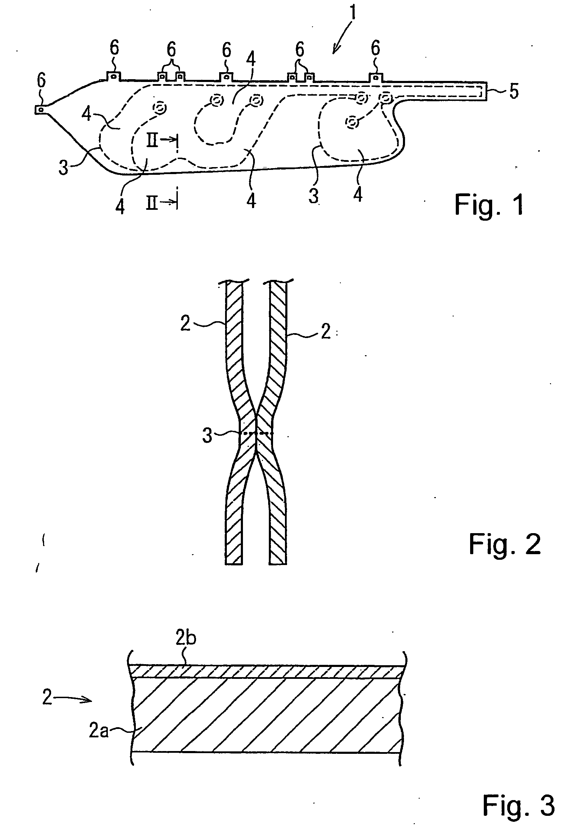

An embodiment will be described below with reference to the drawings. Fig. 1 is a front view of an airbag according to the embodiment, Fig. 2 is a sectional view of Fig. 1 taken along line II-II, and Fig. 3 is a sectional view of a base cloth.

An airbag 1 is a curtain airbag disposed near a roof side rail of an automobile, and deploys downward along the inner sides of a door and a pillar of the automobile when the airbag 1 inflates.

The airbag 1 is formed by sewing two base cloths 2 together with a sewing thread 3 such that chambers 4 are provided between the base cloths 2. A gas injection hole 5 is provided at an end of the airbag 1, and an inflator (not shown) is connected to the gas injection hole 5. The airbag 1 has projecting tabs 6 for attaching the airbag 1 to the roof side rail and an A pillar. The airbag 1 is folded into a long, thin shape, and is disposed so as to extend along the roof side rail. When gas is discharged from the inflator, the airbag 1 deploys downward along the door and the pillar as described above.

As shown in Fig. 3, each base cloth 2 includes a main body 2a made of a woven cloth and a coating layer 2b made of thermoplastic resin formed on one side of the main body 2a. When the base cloths 2 are sewn together, one of the base cloths 2 is placed on the other in such a manner that the coating layers 2b of the base cloths 2 come into contact with each other, and then the base cloths 2 are adhered to each other by heating the portions to be sewn and by applying pressure to the base cloths as necessary. Next, the base cloths 2 are sewn together at the portions to be sewn with the sewing thread 3. The base cloths 2 may also be sewn together with the sewing thread 3 before the coating layers 2b thereof are adhered to each other by heat-sealing. Thereby, an inflatable chamber 4 is formed between the base cloths 2.

In the airbag 1 structured as above, the sewn portions of the base cloths 2 are adhered to each other by heat-sealing the coating layers 2b, and therefore the airbag 1 has high airtightness. In addition, a time required for heat-sealing is short, and therefore the airbag 1 can be manufactured with high efficiency.

In addition, the main bodies 2a are also made of thermoplastic cloth material and heat-sealed together with the coating layers 2b. Therefore, the overall bodies of the base cloths are adhered to each other by heat-sealing at the sewn portions thereof, and therefore the airtightness and strength of the airbag at the sewn portions are further increased.

Although the airbag 1 is a curtain airbag in the above-described embodiment, the present invention may also be applied to other kinds of airbags, such as a passenger airbag, a driver airbag, and a side airbag.

In addition, although the coating layer extends over the entire area of each base cloth in the above-described embodiment, the coating layer may also be provided only at the portion to be sewn.

In addition, although each of the base cloths 2 includes the coating layer 2b in the above-described embodiment, the coating layer 2b may be provided in only one of the base cloths 2.

## Claims

1. An airbag (1) comprising two base cloths (2) that are sewn together such that an inflatable chamber is provided between the base cloths (2),
wherein each of the base cloths (2) comprises a main body (2a),
wherein at least one of the base cloths (2) has a coating layer (2b) made of thermoplastic resin at least at the sewn portion thereof and formed on the main body (2a),
**characterized in that** the sewn portions of the base cloths (2) are adhered to each other by heat-sealing the coating layer (2b) and the main bodies (2a) of the base cloths.

2. An airbag apparatus comprising the airbag according to Claim 1.

## Patentansprüche

1. Airbag (1), umfassend zwei Basisgewebe (2), welche derart zusammengenäht sind, dass zwischen den Basisgeweben (2) eine aufblasbare Kammer bereitgestellt ist,
wobei jedes der Basisgewebe (2) einen Hauptteil (2a) umfasst,
wobei wenigstens eines der Basisgewebe (2) wenigstens an seinem genähten Abschnitt eine Beschichtungslage (2b) aufweist, welche aus thermoplastischem Harz hergestellt ist und auf dem Hauptteil (2a) ausgebildet ist,
**dadurch gekennzeichnet,**
**dass** die genähten Abschnitte der Basisgewebe (2) durch Heißsiegeln der Beschichtungslage (2b) und der Hauptteile (2a) der Basisgewebe aneinander geklebt sind.

2. Airbagvorrichtung, umfassend den Airbag nach Anspruch 1.

## Revendications

1. Coussin gonflable (1) comprenant deux pièces d'étoffe de base (2) qui sont cousues ensemble de sorte qu'une chambre gonflable est établie entre les pièces d'étoffe de base (2),
dans lequel chacune des pièces d'étoffe comprend un corps principal (2a),
et où au moins l'une des pièces d'étoffe (2) comporte une couche de revêtement (2b) faite de résine thermoplastique au moins à sa zone de couture et formée sur le corps principal (2a),
**caractérisé par le fait que** les zones cousues des pièces d'étoffe de base (2) sont mutuellement collées par un scellement à chaud de la couche de revêtement (2b) et des corps principaux (2a) des pièces d'étoffe de base.

2. Dispositif à coussin gonflable comprenant le coussin gonflable selon la revendication 1.
